# EUROPEAN PATENT APPLICATION

(11) **EP 2 133 825 A1**
(43) Date of publication of application: **16.12.2009**
(21) Application number: 07855875.6
(22) Date of filing: 28.12.2007
(51) Int. Cl.: G06K 19/07

(54) **INTEGRATED CIRCUIT CARD AND METHOD FOR TRANSMITTING DATA BY RADIO COMMUNICATION THEREOF**

(30) Priority: 23.03.2007 CN 200710064720
(71) Applicant: Beijing Watch Data System Co., Ltd., Beijing 100015 (CN)
(72) Inventor: LI, Yong, Beijing 100015 (CN); XU, Rongjin, Beijing 100015 (CN)
(74) Representative: Heinze, Ekkehard
(86) International application number: PCT/CN2007/003874
(87) International publication number: WO 2008/116362

(57) **Abstract**

The present invention discloses an integrated circuit (IC) card and a method for transmitting data by radio communication thereof, which are provided to solve a problem that an antenna coil cannot be separated from an IC chip in the normal non-contacting IC card which is limited to apply. The IC card of the present invention includes a main card body and an IC chip set on it; the IC chip includes a CPU connected to a memory through a data bus and an address bus; a RF module for radio frequency identification (RFID) communication and two antenna pins corresponding to the RF module; the two antenna pins are led out of the main card body. The IC card processes data radio communication with the outside by an external antenna electrically connected with the antenna pins and applies to a smart card, especially to a dual interfaces intelligent card and design and manufacture fields of its related products.

## Description

### FIELD OF THE INVENTION

The present invention relates to an integrated circuit card and a method for transmitting data by radio communication thereof.

### DESCRIPTION OF THE RELATED ART

The integrated circuit card is also called as IC card, and integrated circuits are enclosed therein for storing and processing data. From the creation in 1970s, IC cards have been applied in respective aspects of social life with the rapid development of microelectronic technique. Various cards greatly convenience people's life, such as bank credit card, public traffic card for bus, clock card for access control and SIM card for mobile phone.

The IC card develops in a process from storage card to smart card, and from contacting IC card to non-contacting IC card.

The integrated circuit in the storage card is an electrically erasable programmable read only memory (EEPROM), which only has the function of data storage, without the capability of data processing; and the storage card does not have the function of hardware encryption. The integrated circuit in the smart card (CPU card) includes a CPU, an EEPROM, a random access memory (RAM), and a chip operating system (COS) solidified in a read only memory (ROM). The data in the card is composted of an external reading portion and an internal processing portion to ensure the security and reliability of the data in the card.

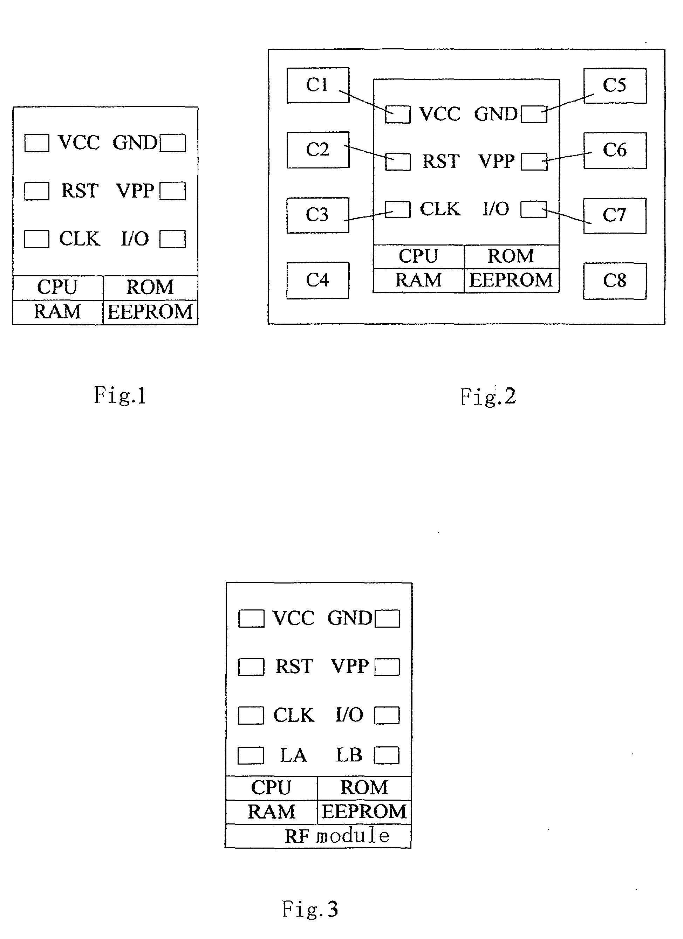

When the contacting IC card is used, a card reader cannot exchange information with the card unless it is in contact with the card contacts. The card defined in ISO/IEC7816 standard is a contacting IC card, and the IC chip embedded therein is provided with 6 pins as shown in Figs. 1 and 2, comprising: a source voltage pin VCC, a reset signal pin RST, a clock signal pin CLK, a grounding pin GND, a programming voltage pin VPP, and an input/output pin I/O. Meanwhile, these pins are corresponding to contacts C1, C2, C3, C5, C6 and C7 on the card surface, respectively, wherein C4 and C8 are not used, C6 is defined as the programming voltage (VPP) in ISO/IEC7816 and may be not physically existed, and if C6 is existed, it shall be in electrical insulation from the integrated circuit and other pins on the IC card. The electrical insulation means that when a 5V DC voltage is applied to C6, the resistance between C6 and other pins is larger than or equal to 10MΩ. These pins and contacts are channels for the IC card to communicate information with outside in a contact way.

When the existing contacting IC card is used, since the card reader must keep in contact with the contacts of the card to exchange information with the card, the card is worn seriously and easy to be polluted, thus the service life is short and the operation speed is low.

Thus, the non-contacting IC card is provided. The non-contacting IC card is also called as radio frequency (RF) card and Proximity card, which exchanges information with the card reader in a radio modulation way. As compared with the contacting IC card, the non-contacting IC card is added with a RF module as well as including all pins of the contacting IC card.

The IC chip embedded in the non-contacting IC card is provided with a RF module, and antenna pins LA, LB connected corresponding to the RF module and directly and electrically connected to the antenna in the card substrate. The non-contacting IC card receives / transmits data from / to the outside through the internal antenna by means of the RF module. During the production of the internal antenna, the antenna pins shall be manually sought out from the card substrate and manually welded to the antenna pins of the IC chip. This production technology requires many people's work, the production efficiency is low and the quality is greatly influenced by human factors, which is inconvenient for mass production.

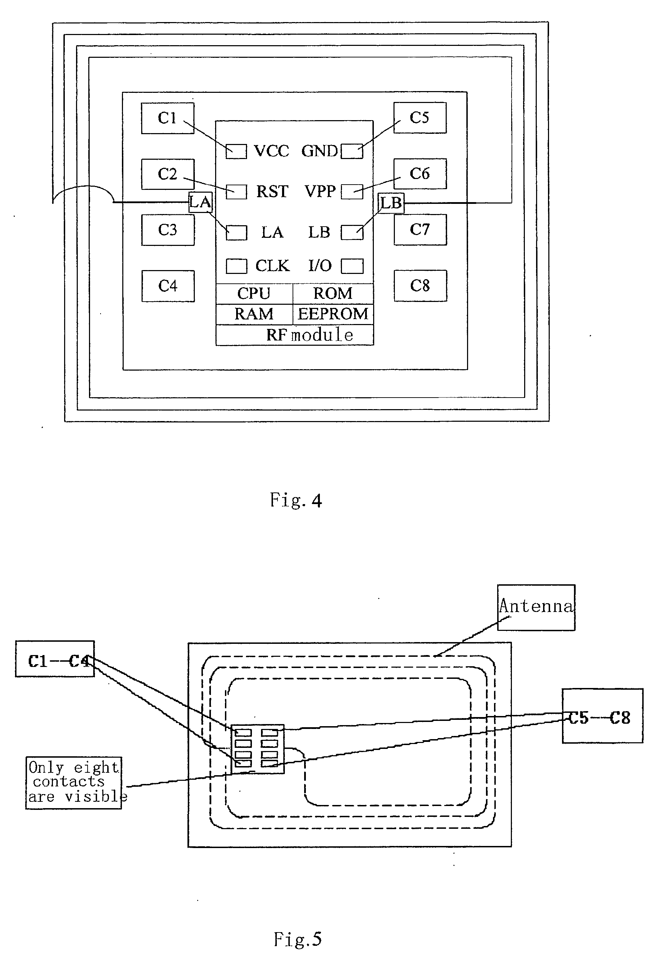

Upon people's demand, a dual interfaces IC card appears, and it supports both contacting and non-contacting data exchange. The structure of the IC chip embedded in the dual interfaces IC card is shown in Figs. 3 to 5, comprising eight pins: a source voltage pin VCC, a reset signal pin RST, a clock signal pin CLK, a grounding pin GND, a programming voltage pin VPP, an input/output pin I/O. These pins are corresponding to contacts C1, C2, C3, C5, C6 and C7 on the IC card surface, respectively, and other two contacts C4 and C8 are not used. In addition, the IC chip embedded in the card is provided with antenna pins LA, LB corresponding to the RF module and directly and electrically connected to the antenna in the card substrate. The non-contacting IC card receives / transmits data from / to the outside through the internal antenna by means of the RF module. The dual interfaces IC card simultaneously has the advantages of the contacting and non-contacting cards, and hence has a wide development space.

As compared with the chip of a normal non-contacting IC card, the chip of the dual interfaces IC card has a RF module and corresponding antenna pins LA and LB.

The antenna of the conventional non-contacting smart card (including the dual interfaces smart card) is generally embedded in the card substrate, and during a technological process, the antenna is directly connected to the antenna pins LA and LB of the IC chip. The conventional dual interfaces IC card has an internal antenna which is internally connected to the RF module of the integrated circuit, and only eight contacts can be viewed on the appearance, thus an external antenna cannot be introduced. With this configuration, a coil used as the antenna cannot be separated from the IC chip in actual applications, thus the application occasions are limited, e.g., when the IC card is embedded in the mobile phone and realizes the non-contacting function, it is obvious that the antenna cannot be embedded in the IC card and shall only be exposed since the IC card is embedded in the mobile phone and compatible with relevant telecom specifications.

### SUMMARY OF THE INVENTION

The first object of the present invention is to provide an IC card on which the antenna is exposed.

In order to achieve the above object, the following technical solution is adopted by the present invention.

The IC card comprising a main card body and an IC chip enclosed in the main card body; the IC chip comprising: a central processing unit connected to a memory via a data bus and an address bus; a radio frequency (RF) module for radio frequency identification (RFID) communication and two antenna pins corresponding to the RF module; the two antenna pins are led out of the main card body.

Wherein the two antenna pins are led out of the main card body in a way that the surface of the main card body is provided with two antenna contacts C9 and C10 correspondingly and electrically connected to the two antenna pins.

The IC chip further comprising: a source voltage pin VCC for supplying a source voltage to the IC chip; a grounding pin GND for grounding the IC chip; a reset pin RST for resetting the IC chip; a clock signal pin CLK for providing a clock signal to the IC chip; and an input/output pin I/O for inputting / outputting contact data; wherein the source voltage pin VCC, the reset pin RST, the clock signal pin CLK, the grounding pin GND, and the input/output pin I/O are correspondingly electrically connected to contacts C1, C2, C3, C5, and C7 on the surface of the main card body, respectively.

The IC chip further comprising a programming voltage pin VPP for supplying a programming voltage to the IC chip, and the programming voltage pin VPP is electrically connected to the contact C6 on the surface of the main card body.

The surface of the main card body further comprising two standby contacts C4 and C8.

The contacts on the surface of the IC card are divided into two connection areas: contacts C9 and C10 belong to a non-contacting data antenna connection area, and other contacts belong to a contacting data transmission connection area.

The two antenna pins are electrically connected to an external antenna.

Another object of the present invention is to provide a method for the IC card to perform radio data transmission with the outside. In order to achieve the object, the following technical solution adopted by the present invention: the IC card performs RFID communication with the outside through an external antenna; the IC card performs radio data transmission with the outside in a process that a RF module comprised in the IC chip of the IC card performs RFID communication with the outside via the external antenna connected to the antenna pins on the main card body.

In the existing IC card having an internal antenna, the antenna pins LA and LB corresponding to the RF module are directly and electrically connected to an antenna provided in the card substrate. In the IC chip of the IC card of the present invention, the antenna pins LA and LB corresponding to the RF module are led out of the main card body, respectively, and the external antenna is electrically connected to the IC card through the antenna pins, so as to expose the antenna. The IC card of the present invention exchanges data with the outside through the external antenna, and the coil has various forms, thus the application occasions of the IC card of the present invention will be more extensive.

### BRIEF DESCRIPTION OF THE DRAWINGS

Fig. 1 is a structural diagram of an IC chip of an existing contacting IC card.
Fig. 2 is a structural diagram of a contacting IC card comprising the IC chip as shown in Fig. 1.
Fig. 3 is a structural diagram of an IC chip of an existing dual interfaces IC card.
Fig. 4 is a structural diagram of a dual interfaces IC card comprising the IC chip as shown in Fig. 3.
Fig. 5 is an appearance diagram of the dual interfaces IC card as shown in Fig. 4.
Fig. 6 is a structural diagram of a first embodiment of an IC card of the present invention.
Fig. 7 is a structural diagram of a second embodiment of an IC card of the present invention.
Fig. 8 is the structural diagram of a third embodiment of an IC card of the present invention.
Fig. 9 is the structural diagram of a fourth embodiment of an IC card of the present invention.
Fig. 10 is a diagram illustrating the connection relationships between pins of the IC chip and card surface contacts of the present invention.
Fig. 11 is an internal structure diagram of an IC card of the invention.
Fig. 12 is a structural diagram of an embodiment of the present invention in which the IC card is connected to different coils.

### DETAILED DESCRIPTION OF THE PREFERRED EMBODIMENTS

In order to enrich the applications of the non-contacting smart card, the present invention provides a new IC card and a method for communicating information with the outside. The embodiments of the present invention are described as follows in combination with the drawings.

### Embodiment 1:

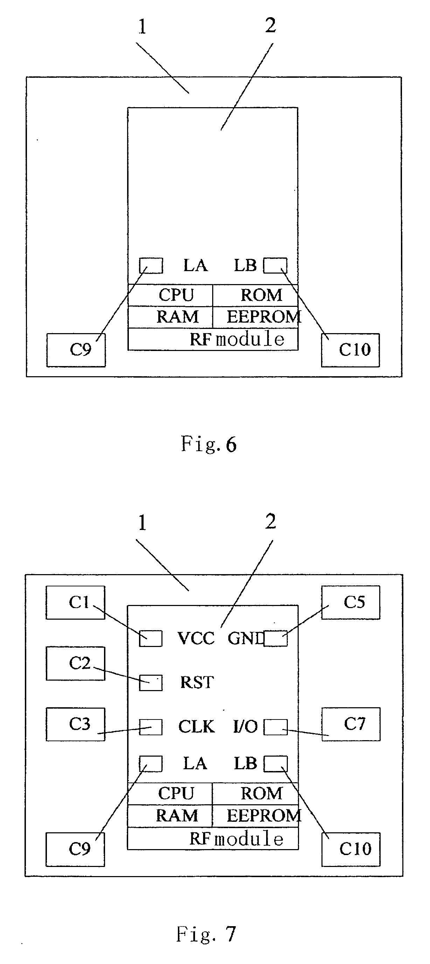

As shown in Fig. 6, the IC card of the present invention comprises a main card body 1 and an IC chip 2 provided thereon. The main card body 1 comprises one or more thermoplastic or thermosetting layers; the IC chip is a silicon wafer having an integrated circuit, and the IC chip 2 is enclosed inside the main card body 1.

Wherein the IC chip 2 comprises:
a CPU connected to memories ROM, RAM and EEPROM through a data bus and an address bus;
a RF module for radio frequency identification (RFID) communication and two antenna pins LA, LB electrically connected to the RF module;
wherein the two antenna pins are led out of the main card body; thus the antenna pins are directly and electrically connected to an external antenna, and RFID communication with the outside can be carried out through the external antenna under the control of the RF module.

The two antenna pins are led out of the main card body in a way that the surface of the main card body is provided with two antenna contacts C9 and C10 in parallel, which are correspondingly and electrically connected to the two antenna pins LA and LB.

Thus, the external antenna is directly and electrically connected to the IC card through the two antenna pins or the two antenna contacts, so that the antenna is exposed. Thereby, the IC card of the present invention is capable of exchanging data with the outside via the external antenna.

### Embodiment 2:

As can be seen from the above descriptions, the IC card of the present invention is a simple antenna-exposed non-contacting IC card, and it does not support the transmission of contacting data. In order to further expand the application range of the IC card of the present invention so that the IC card supports both contacting and non-contacting data transmission, the IC chip 2 enclosed in the IC card as shown in Fig. 7 of the present invention further comprises:
a source voltage pin VCC for supplying a source voltage to the IC chip;
a grounding pin GND for grounding the IC chip;
a reset pin RST for resetting the IC chip;
a clock signal pin CLK for providing a clock signal to the IC chip; and
an input/output pin I/O for inputting / outputting contact data.

Wherein the source voltage pin VCC, the reset pin RST, the clock signal pin CLK, the grounding pin GND, and the input/output pin I/O are correspondingly and electrically connected to contacts C1, C2, C3, C5, and C7 on the surface of the main card body, respectively.

Thus, the IC card of the present invention is a new dual interfaces intelligent card, which supports both contacting and non-contacting data transmission. The external antenna provided on the IC card is an effective extension of the application of the conventional dual interfaces intelligent card, and enriches the application occasions of the dual interfaces intelligent card.

### Embodiment 3:

In order to program the IC chip inside the IC card, a third embodiment of the present invention is described as follows.

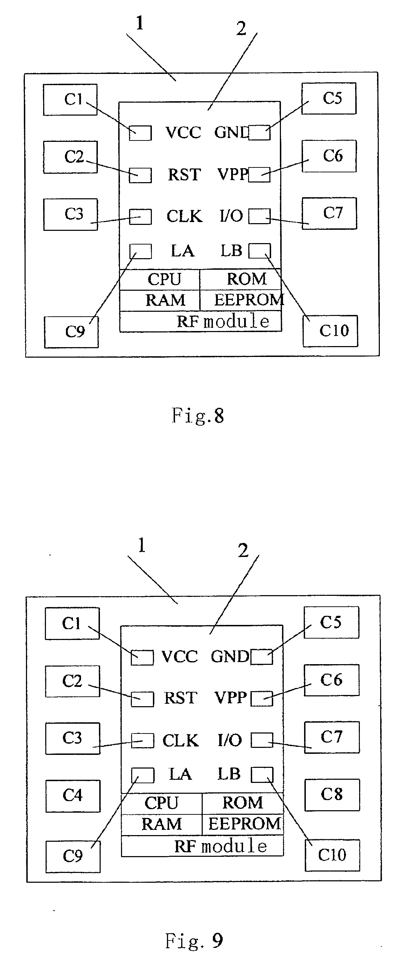

As shown in Fig. 8, the IC chip 2 further comprising:
a programming voltage pin VPP for supplying a programming voltage to the IC chip.

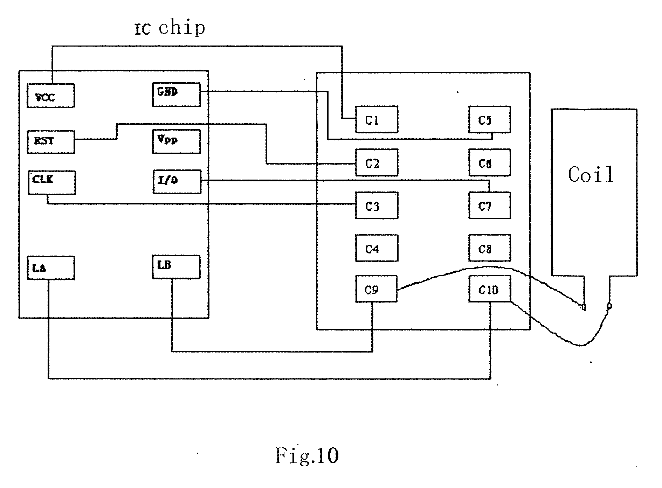

The programming voltage pin VPP is electrically connected to a contact C6 flushed with the surface of the main card body, of course, the electrical connection between the programming voltage pin VPP and the contact C6 on the surface of the main card body is optional, as shown in Fig. 10. In ISO/IEC7816 C6, C6 is defined as the programming voltage (VPP) and may be not physically existed, and if C6 is existed, it shall be in electrical insulation from the integrated circuit and other pins on the IC card. The electrical insulation means that when a 5V DC voltage is applied to C6, the resistance between C6 and other pins is larger than or equal to 10my. The distinction between the IC card of the present invention and the normal contacting IC card is that the former IC card comprises a RF module and corresponding antenna pins LA and LB, and the two antenna pins LA and LB are correspondingly and electrically connected to antenna contacts C9 and C 10 flushed with the main card body.

### Embodiment 4:

As shown in Fig.9, the surface of the main card body 1 of the present invention further comprising: two standby contacts C4 and C8.

The above mentioned eight contacts C1 to C8 completely meet the IS07816-2 standard.
IS07816-2 specifies the usages and electrical characteristics of the eight contacts numbered as C1, C2, C3, C4, C5, C6, C7 and C8, and the contacts are distributed as follows:

| | | | |
|---|---|---|---|
| C1 VCC | (supplying voltage) | C5 GND | (ground) |
| C2 RST | (reset signal) | C6 VPP | (programming voltage) |
| C3 CLK | (clock signal) | C7 I/O | (input/output) |
| | | | |
| C4 is reserved for a future use by ISO/IECJTC 1/SC 17, and C8 is reserved for a future use by ISO/IECJTC 1/SC 17. | | | |

ISO/IEC7816-2 specifies the arrangement of the eight contacts, wherein the eight contacts are arranged in two columns, each column has four contacts, and each contact has a size of 2×1.7 mm; the column pitch is 5.62 mm, and the longitudinal interval between contacts is 1.7 mm.

The contacts C9 and C10 of the IC card of the present invention can be arranged flexibly upon request, e.g., they can be arranged at positions close to the contacts C4 and C8, or at two sides of the contacts C1 to C8.

Thereby, the IC card of the present invention can exchange data with the outside through the contact definition meeting IS07816-2.

The IC chip is enclosed in the IC card and is invisible at the outside of the IC card, and only ten contacts can be viewed outside the IC card. These contacts are windows for information exchange between the IC chip and the outside, wherein the eight contacts C1 to C8 support applications of the normal contacting smart card, while C9 and C10 provide windows for the connection of the external antenna. Through the electrical connection from the two contacts to the external antenna, the application range of the IC card of the present invention is more extensive, since the coil of external antenna is various, such as having a quadrate shape, a circular shape, or the like, as shown in Figs. 10 to 12. Of course, the shapes of the external coil can be applied respectively in combination with the four embodiments.

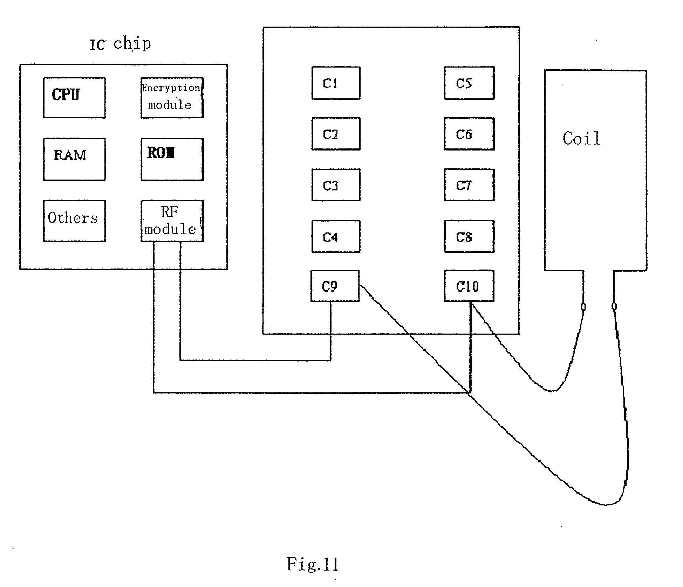

In order to ensure the security of the card and data therein, the IC chip inside the IC card may further comprise an encryption module, as shown in Fig. 11, so as to ensure the security of data in the card at a certain degree. The encryption module can be applied respectively in combination with the four embodiments.

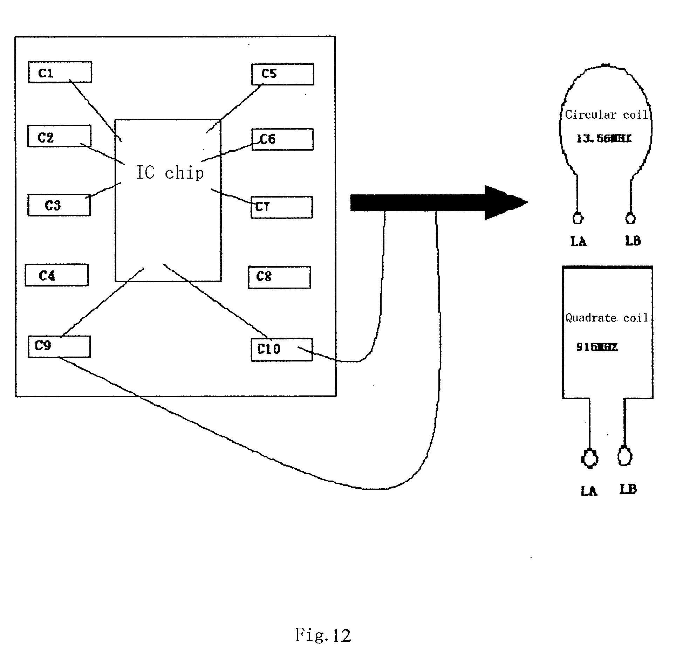

For example, the frequency bands supported in the present embodiment are 13.56MHZ and 915MHZ, as shown in Fig. 12, the circular coil supports 13.56MHZ, and the quadrate coil supports 915MHZ; if the function of the IC chip allows, more frequency bands can be supported.

Generally, the surface contacts of the IC card of the present invention are divided into two connection areas: contacts C1 to C8 belong to a contacting data transmission connection area, and contacts C9 to C10 belong to a non-contacting data antenna connection area.

The package of the IC chip of the present invention is compatible with ISO7816-2 standard, including a source voltage pin, a reset signal pin, a clock signal pin, a grounding pin, an input/output pin, a first standby pin, and a second standby pin; meanwhile, two contacts are added for connection with a non-contacting antenna and transmission and reception of radio data; the IC chip shall include a RF module circuit. The IC chip and the radio module are both provided in the card body.

The IC card of the present invention is adaptable for smart card, especially adaptable for dual interfaces smart card and design and manufacture fields of its related products. Herein the related products mean productions deriving from the dual interfaces smart IC card, such as embedded module, IC card reading/writing device, RF antenna, RF reader/writer, and the like.

In addition, the present invention further provides a method for the IC card to perform radio data transmission with the outside: the IC card performs radio data transmission with the outside through an external antenna.

The RD module of the IC chip in the IC card performs radio data transmission with the outside through the external antenna electrically connected to the contacts C9 and C10 flushed with the surface of the main card body.

The above descriptions are just preferred embodiments of the present invention, and the protection scope of the present invention is not limited thereby. Any change or substitution that can be easily conceived by a person skilled in the art within the technical scope disclosed by the present invention shall be covered by the protection scope of the present invention. Therefore, the protection scope of the present invention shall be subject to the protection scope of the claims.

## Claims

1. An integrated circuit (IC) card, comprising a main card body and an IC chip enclosed in the main card body;
the IC chip comprinsing:
a central processing unit connected to a memory via a data bus and an address bus;
a radio frequency module for radio frequency identification communication and two antenna pins corresponding to the radio frequency module;
wherein the two antenna pins are led out of the main card body.

2. The IC card according to claim 1, wherein the two antenna pins are led out of the main card body in a way that the surface of the main card body is provided with two antenna contacts C9 and C10 correspondingly and electrically connected to the two antenna pins.

3. The IC card according to claim 2, wherein the IC chip further comprising:
a source voltage pin VCC for supplying a source voltage to the IC chip;
a grounding pin GND for grounding the IC chip;
a reset pin RST for resetting the IC chip;
a clock signal pin CLK for providing a clock signal to the IC chip; and
an input/output pin I/O for inputting / outputting contact data;
wherein the source voltage pin VCC, the reset pin RST, the clock signal pin CLK, the grounding pin GND, and the input/output pin I/O are correspondingly and electrically connected to contacts C1, C2, C3, C5, and C7 on the surface of the main card body, respectively.

4. The IC card according to claim 3, wherein the IC chip further comprising a programming voltage pin VPP for supplying a programming voltage to the IC chip, and the programming voltage pin VPP is electrically connected to the contact C6 on the surface of the main card body.

5. The IC card according to claim 3 or 4, wherein the surface of the main card body further comprising two standby contacts C4 and C8.

6. The IC card according to claim 3 or 4, wherein the contacts on the surface of the IC card are divided into two connection areas: contacts C9 and C10 belong to a non-contacting data antenna connection area, and other contacts belong to a contacting data transmission connection area.

7. The IC card according to claim 5, wherein the contacts on the surface of the IC card are divided into two connection areas: contacts C9 and C10 belong to a non-contacting data antenna connection area, and other contacts belong to a contacting data transmission connection area.

8. The IC card according to claim 1, 2, 3 or 4, wherein the two antenna pins are electrically connected to an external antenna.

9. A method for the IC card according to claim 1, 2, 3 or 4 to perform radio data transmission with the outside, wherein the IC card performs radio frequency identification communication with the outside through an external antenna.

10. The method for the IC card to perform radio data transmission with the outside according to claim 9, wherein the IC card performs radio data transmission with the outside in a process that a radio frequency module comprised in a IC chip of the IC card performs radio frequency identification communication with the outside via the external antenna connected to the antenna pins on the main card body.
